# FASCICULE DE BREVET EUROPEEN

(11) **EP 3 458 742 B1**
(45) Date de publication et mention de la délivrance du brevet: **17.08.2022**
(21) Numéro de dépôt: 17725670.8
(22) Date de dépôt: 26.04.2017
(51) Int. Cl.: F16F 15/14

(54) **DISPOSITIF D'AMORTISSEMENT D'OSCILLATIONS DE TORSION POUR SYSTÈME DE TRANSMISSION DE VÉHICULE**
VORRICHTUNG ZUR DÄMPFUNG VON TORSIONSSCHWINGUNGEN FÜR EIN FAHRZEUGGETRIEBESYSTEM
DEVICE FOR DAMPING TORSIONAL OSCILLATIONS FOR A VEHICLE TRANSMISSION SYSTEM

(30) Priorité: 19.05.2016 FR 1654454
(43) Date de publication de la demande: 27.03.2019
(73) Titulaire: Valeo Embrayages, 80009 Amiens Cedex 2 (FR)
(72) Inventeur: BOUCHE, Gabriel, 80009 AMIENS CEDEX 2 (FR); DAST, Pascal, 80009 AMIENS cedex 2 (FR); MALLEY, Matthieu, 80009 AMIENS cedex 2 (FR)
(74) Mandataire: Valeo Powertrain Systems
(86) Numéro de dépôt international: PCT/FR2017/050991
(87) Numéro de publication internationale: WO 2017/198922

(56) Documents cités:
- FR-A1- 3 014 982
- FR-A1- 3 019 608
- FR-A1- 3 019 872

## Description

La présente invention concerne un composant pour système de transmission de véhicule comprenant un dispositif pendulaire.

L'invention s'applique notamment, mais non exclusivement, aux véhicules dits industriels, ces derniers étant par exemple des poids lourds, des véhicules de transport en commun, ou des véhicules agricoles.

L'invention peut également s'appliquer aux véhicules dits passagers.

Dans une telle application, le dispositif pendulaire peut être intégré à un embrayage apte à relier sélectivement le moteur thermique à la boîte de vitesses, afin de filtrer les oscillations de torsion dues aux acyclismes du moteur.

Un tel dispositif pendulaire met classiquement en œuvre un support et un ou plusieurs corps pendulaires mobiles par rapport à ce support, le déplacement par rapport au support des corps pendulaires étant guidé par des organes de roulement coopérant d'une part avec des pistes de roulement solidaires du support, et d'autre part avec des pistes de roulement solidaires des corps pendulaires. Chaque corps pendulaire comprend par exemple deux masses pendulaires liées entres elles par un organe de liaison définissant également la piste de roulement solidaire du support.

Il est connu de solidariser le support du dispositif d'amortissement d'oscillations de torsion à un volant primaire, solidaire du vilebrequin du moteur thermique du véhicule. Dans un tel emplacement fonctionnel, le dispositif d'amortissement d'oscillations de torsion est disposé dans la chaîne de propulsion directement en aval du moteur thermique, c'est-à-dire sans moyen d'amortissement interposé entre le vilebrequin et le support du dispositif pendulaire. Les corps pendulaires sont alors dans un environnement hostile dans lequel ils sont soumis à des oscillations de torsion d'intensité très importante. Néanmoins, un tel emplacement fonctionnel du dispositif pendulaire peut s'avérer souhaitable pour effectuer un premier filtrage de ces oscillations de torsion. Le document FR 3 019 608 A1 divulgue un tel dispositif pendulaire ayant les caractéristiques du préambule de la revendication 1.

Dans une application de type véhicules industriels, les contraintes que subissent les masses pendulaires des corps pendulaires sont extrêmement importantes et les organes de liaison doit être adapté sous peine que ces masses pendulaires ne se désolidarisent en fonctionnement. Lorsque le dispositif pendulaire est solidarisé au volant primaire, il est usuel de le disposer du côté du vilebrequin et du moteur thermique. Ce positionnement le rend plus facilement accessible en cas de maintenance, mais c'est aussi un positionnement à risque pour le vilebrequin et pour le moteur thermique qui se trouvent en regard direct du dispositif. En particulier, le moteur thermique est vulnérable en cas de désolidarisation des masses à pleine vitesse de rotation.

Il existe ainsi un besoin pour permettre d'utiliser un dispositif pendulaire qui soit capable de fonctionner lorsque les oscillations de torsion qu'il voit non pas été préalablement filtrées et qui soit adapté aux contraintes associées aux véhicules de type industriel.

L'invention a pour but de répondre à ce besoin et elle y parvient, selon l'un de ses aspects, à l'aide d'un dispositif pendulaire apte à être intégré dans un composant pour système de transmission de véhicule, notamment de véhicule industriel, comprenant :
- un support, mobile en rotation et apte à être solidarisé au composant, et
- au moins un corps pendulaire mobile par rapport au support, le déplacement du corps pendulaire par rapport au support étant guidé par au moins un organe de roulement coopérant avec au moins une première piste de roulement solidaire du support et au moins une deuxième piste de roulement solidaire du corps pendulaire, le corps pendulaire comprenant :
- une première et une deuxième masse pendulaires espacées axialement l'une par rapport à l'autre et mobiles par rapport au support, la première masse pendulaire étant disposée d'un premier côté du support et la deuxième masse pendulaire étant disposée d'un deuxième côté du support, et
- au moins un organe de liaison de la première et de la deuxième masse appariant lesdites masses, l'organe de liaison étant disposé dans une fenêtre du support dont une partie du contour définit la première piste de roulement, caractérisé en ce que
- l'organe de liaison s'étend entre un premier plan (P1) et un deuxième plan (P2) qui sont tangents à l'organe de liaison,
- la deuxième piste de roulement (25) est définie par le contour de l'organe de liaison (20) et s'étend depuis un troisième plan (P3) vers un quatrième plan (P4) qui sont sécants à l'organe de liaison,
- une première distance D5 mesurée entre le premier plan et le deuxième plan est 1,5 à 3,5 fois supérieure à une deuxième distance D6 mesurée entre le troisième plan et le quatrième plan, le premier plan, le deuxième plan, le troisième plan et le quatrième plan étant parallèles entre eux.

Selon un aspect de l'invention, la distance entre le premier plan et le troisième plan d'un côté et la distance entre le deuxième plan et le quatrième plan d'un autre côté sont équidistantes.

Selon un autre aspect de l'invention, la partie de l'organe de liaison dédiée au roulement du corps pendulaire est localisée et minimisée de sorte que la partie disponible pour la fixation des masses pendulaires est optimisée pour améliorer la tenue des masses pendulaires entre elles. Un tel organe de liaison est donc particulièrement bien adapté pour répondre aux contraintes associées aux véhicules industriels.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « solidaire » signifie « rigidement couplé »,
- la position de repos du dispositif est celle dans laquelle les corps pendulaires sont soumis à une force centrifuge, mais non à des oscillations de torsion provenant des acyclismes du moteur thermique,- le contour de la fenêtre est la surface du support définissant la fenêtre.

Selon un aspect de l'invention, l'organe de liaison coopère avec un unique organe de roulement. L'organe de liaison ne définit donc qu'une seule piste de roulement.

Selon un aspect de l'invention, l'organe de symétrique, notamment au moins fonctionnellement, par rapport a un plan comprenant l'axe de rotation. Il peut ainsi être monté dans un sens ou dans l'ordre par l'opérateur de sorte qu'il n'y pas de risque d'inversion du sens de montage dans une fenêtre, ni de risque d'inversion des organes de liaison lorsque le dispositif comprend plusieurs corps pendulaire et/ou deux organes de liaison par corps pendulaires.

Selon un aspect de l'invention, la fenêtre peut être symétrique, ce qui simplifie également la fabrication du montage, notamment quand il y a plusieurs fenêtre dans le support.

Selon un aspect de l'invention, le ratio entre la dimension angulaire de l'organe de liaison et la dimension de la fenêtre peut être compris entre 0,6 et 0,9, de préférence entre 0,7 et 0,8.

Selon un aspect de l'invention, la deuxième piste de liaison peut s'étendre sur une dimension angulaire inférieure à 65%, notamment inférieure à 50%, de la dimension angulaire de l'organe de liaison.

Au sens de la présente demande « la dimension angulaire » d'une pièce est l'angle maximal défini par deux rayons issus de d'un axe parallèle à l'axe de rotation du support (par exemple un axe appartenant à un plan de symétrie de cette pièce) et coupant ladite pièce.

Selon un autre aspect de l'invention, l'organe de liaison peut comporter au moins un système de liaison des masses pendulaires s'étendant au moins en partie radialement au niveau de la deuxième piste de roulement.

Un tel système permet de s'extraire de la nécessité de disposer la fonction assemblage radialement en dessous de la piste de roulement et donc de bénéficier d'un organe de liaison radialement compact. La partie de l'organe de roulement, notamment celle radialement en dessous de la deuxième piste de roulement, laissée libre de la fonction d'assemblage peut être utilisée pour d'autres fonctions associées à l'organe de liaison, telle que la fonction d'amortissement de butée.

Du fait de sa compacité radiale, un tel organe de liaison est donc susceptible de se déplacer radialement dans une mesure limitée. La fenêtre et le support dans laquelle celle-ci est ménagée peuvent être configurés en conséquence pour réduire l'encombrement radial du dispositif.

Au sens de la demande, deux pièces sont « au moins en partie radialement au même niveau » lorsqu'il existe, dans un plan perpendiculaire à l'axe de rotation, un cercle de centre l'axe de rotation coupant ces deux pièces.

Selon un aspect de l'invention, le système de liaison peut comprendre un élément d'assemblage reçu dans une ouverture ménagée dans une extrémité circonférentielle de l'organe de liaison.

L'ouverture peut être positionnée par rapport à la deuxième piste selon une distance prédéfinie D7. En effet, l'ouverture présente un bord périphérique. La distance D7 est mesurée le long d'une droite passant par une tangente du bord périphérique située la plus proche de la deuxième piste de roulement et par la deuxième piste de roulement. Cette distance D7 est préférentiellement supérieure ou égale à une épaisseur de l'organe de liaison. Ainsi, avec une telle disposition de l'ouverture par rapport à la deuxième piste de roulement, d'éventuels risques de déformation de la deuxième piste de roulement au cours du procédé de fixation de l'organe de liaison aux deux masses pendulaires sont limités, voir supprimés. L'épaisseur de l'organe de liaison est mesurée axialement.

L'ouverture peut être décalée circonférentiellement de la deuxième piste de roulement et peut s'étendre au moins en partie radialement au niveau de cette piste de roulement.

L'organe d'assemblage est par exemple un rivet.

L'ouverture peut être circulaire. Le diamètre de cette ouverture peut être compris entre 6 et 10mm.

Selon un aspect de l'invention, l'extrémité circonférentielle peut prendre la forme d'un lobe sensiblement arrondie. L'extrémité circonférentielle peut s'étendre circonférentiellement depuis la deuxième piste de roulement. La rencontre de l'extrémité circonférentielle et la deuxième piste de roulement peuvent définir une rupture de la trajectoire du contour formant ainsi une des deux extrémités circonférentielles de la deuxième piste de roulement. L'extrémité circonférentielle peut s'étendre radialement extérieurement par rapport à la deuxième piste de roulement. L'extrémité circonférentielle peut être reliée au reste de l'organe de liaison via un amincissement dudit organe.

L'extrémité circonférentielle peut venir au contact du contour de la fenêtre à l'issue d'un déplacement maximal dans la direction circonférentielle du corps pendulaire depuis la position de repos. Un tel contact permet de limiter le déplacement du corps pendulaire dans la direction circonférentielle.

L'extrémité circonférentielle et le contour de la fenêtre peuvent être conformés de sorte que le contact se fasse selon une surface à l'issu du déplacement maximal. Cela permet de répartir les efforts liés à ce contact et de minimiser l'usure des deux pièces (support et organe de liaison).

Selon un aspect de l'invention, l'ouverture peut être réalisée par découpage, notamment par découpage presse. Cela permet de disposer d'un organe de roulement qui peut être obtenu suivant un procédé classique de réalisation, bien maitrisé et économique.

Selon un aspect de l'invention, l'extrémité circonférentielle peut être configurée de sorte que l'ouverture puisse être réalisée par découpage, notamment par découpage presse. Les dimensions de l'organe de liaison peuvent être choisies pour que l'organe de liaison après réalisation de l'ouverture par découpage, notamment par découpage presse, présente une bonne tenue mécanique. Selon un aspect de l'invention, l'ouverture peut être à une distance minimale du contour de l'organe de liaison supérieure à la moitié de la dimension axiale de l'organe de liaison. La dimension axiale de l'organe de liaison peut être comprise entre 5 et 9mm, notamment comprise entre 6,5 et 7,5mm, notamment sensiblement égale à 6,8mm. Une telle quantité de matière permet que la découpe n'impacte que faiblement la tenue mécanique de l'organe de liaison.

Chacune des masses pendulaires peut également être configurée pour que l'ouverture recevant l'organe d'assemblage puisse être réalisée par découpage, notamment par découpage presse. En particulier, des ouvertures recevant les éléments d'assemblage, par exemple des rivets, ménagées dans les masses pendulaires peuvent être à une distance minimale du contour des masses pendulaires supérieure à la moitié de la dimension axiale des masses pendulaires. La dimension axiale des masses pendulaire peut être comprise entre 6 et 10mm, notamment égale à 8mm.

Selon un aspect de l'invention, le dispositif pendulaire peut comprendre au moins un organe d'amortissement de butée interposé radialement entre le support et l'organe de liaison. Cet organe d'amortissement permet de réduire les chocs entre le corps pendulaire et le support à l'issue d'un déplacement intermédiaire dans la direction circonférentielle du corps pendulaire depuis la position de repos et/ou en cas de chute radiale du corps pendulaire, par exemple lors de l'arrêt du moteur thermique du véhicule.

L'organe d'amortissement de butée peut présenter des propriétés élastiques permettant l'amortissement des chocs liés à la venue en contact du corps pendulaire et du support. L'organe d'amortissement est par exemple réalisé en élastomère ou en caoutchouc.

Selon un aspect de l'invention, l'organe d'amortissement peut être solidaire de l'organe de liaison. L'organe d'amortissement peut prendre une forme sensiblement cubique. L'organe d'amortissement peut être reçu dans un renfoncement ménagé dans l'organe de liaison. L'organe d'amortissement peut être monté à force dans le renfoncement. L'organe d'amortissement peut être maintenu radialement par complémentarité de forme dans le renfoncement. Le renfoncement peut permettre de définir l'amincissement de l'organe de liaison par lequel l'extrémité circonférentielle est reliée au reste dudit organe.

L'organe d'amortissement peut être disposé du côté de l'extrémité circonférentielle dans laquelle est ménagée l'ouverture recevant l'élément d'assemblage.

A l'issue d'un déplacement intermédiaire du corps pendulaire depuis sa position de repos, l'organe d'amortissement de butée peut venir en contact de l'organe de liaison et du support pour amortir les chocs puis à l'issue d'un déplacement maximal, l'organe de liaison peut venir directement en contact du support pour stopper le déplacement du corps pendulaire.

Entre le déplacement intermédiaire et le déplacement maximal du corps pendulaire, l'organe d'amortissement est progressivement comprimé. Entre le déplacement intermédiaire et le déplacement maximal du corps pendulaire, l'organe d'amortissement est progressivement comprimé. Le corps pendulaire, notamment son extrémité circonférentielle, peut être configurée de sorte que l'écrasement maximal de l'organe d'amortissement ne dépasse pas 25% de sa dimension maximale.

L'organe d'amortissement définit deux faces latérales en regard des masses pendulaires, ces faces latérales peuvent comporter chacune un plot en saillie axial. Ces plots peuvent être en regard axial l'un de l'autre. La dimension axiale de l'organe au niveau des plots est plus grande que l'écart axial entre les masses pendulaires de sorte que les plots sont en permanence en contact de ces dites masses. Ces contacts permettent d'immobiliser par frottement l'organe d'amortissement dans le renfoncement. Les plots étant localisés sur les surfaces axiales, ils autorisent un leger mouvement axial de l'organe d'amortissement de butée.

Chaque plot peut être de forme sensiblement arrondie. La dimension axiale de chaque plot peut être comprise entre 0.2 et 0.6mm, notamment égale à 0.4mm.

Selon un autre aspect de l'invention, l'organe de liaison peut comporter deux ouvertures pour recevoir des organes d'assemblage encadrant circonférentiellement la deuxième piste de roulement. Chaque ouverture peut être ménagée dans une extrémité circonférentielle de l'organe de liaison en forme de lobe.

Chaque ouverture peut s'étendre au moins en partie radialement au niveau de la deuxième piste de roulement.

Le dispositif peut comporter deux organes d'amortissement de butée, chacune étant associée uniquement à un déplacement circonférentielle du corps pendulaire soit dans le sens horaire, soit dans le sens antihoraire. En variante un seul organe d'amortissement de butée peut être prévu auquel cas il agira pour un déplacement dans la direction circonférentielle du corps pendulaire indépendamment de son sens (horaire ou antihoraire).

Entre les deux renfoncements dans lesquels sont reçus les organes d'amortissement de butée, l'organe de liaison peut présenter une forme d'ancre permettant la retenue radiale desdits organes.

Les renfoncements peuvent être disposés circonférentiellement entre les ouvertures des organes d'assemblage et radialement intérieurement par rapport à la deuxième piste de roulement.

Dans tout ce qui précède, le support peut être unique et il peut être réalisé d'une seule pièce. Le support est par exemple une tôle creuse. Le support peut s'étendre exclusivement entre un bord radialement intérieur sensiblement circulaire et un bord radialement extérieur sensiblement circulaire, les fonctions de guidage du déplacement des corps pendulaires et de fixation sur le composant étant alors concentrées dans l'espace défini entre les bords précités du support.

L'organe de roulement peut coopérer avec uniquement une première piste de roulement et uniquement une deuxième piste de roulement. L'organe de roulement peut coopérer avec les pistes de roulement uniquement via sa surface extérieure. Ainsi, une même portion de cette surface extérieure peut coopérer alternativement avec les deux première et deuxième pistes de roulement lorsque l'organe de roulement se déplace.

La fenêtre peut être un évidement à contour fermé et continu ménagé dans le support. La fenêtre définit un espace vide à l'intérieur du support. Dans la fenêtre peuvent être disposés uniquement un organe de liaison, un organe de roulement et éventuellement un ou plusieurs organes d'amortissement de butée.

La première piste de roulement peut être définie par une partie du contour de la fenêtre orientée radialement vers l'intérieur. La deuxième piste de roulement peut être définie par une partie de contour de l'organe de liaison orientée radialement vers l'extérieur.

L'organe de roulement peut être uniquement sollicité en compression entre les pistes de roulement mentionnées ci-dessus. Les première et deuxième pistes de roulement peuvent être au moins en partie radialement en regard, c'est-à-dire qu'il existe des plans perpendiculaires à l'axe de rotation dans lesquels ces pistes de roulement s'étendent toutes les deux.

L'organe de roulement est par exemple un rouleau de section circulaire dans un plan perpendiculaire à l'axe de rotation du support. Les extrémités axiales de l'organe de roulement peuvent être dépourvues de rebord annulaire fin. L'organe de roulement est par exemple réalisé en acier. L'organe de roulement peut être creux ou plein. La section circulaire de l'organe de roulement peut être comprise entre 15 et 25mm, notamment égale à 19mm.

Dans tout ce qui précède, le corps pendulaire peut être configuré pour être accordé à une valeur d'ordre choisie de manière à ce que le rapport entre cette valeur d'ordre et l'ordre d'excitation du moteur thermique soit supérieur à 1,1.

Un accord à une telle valeur d'ordre du corps pendulaire lui permet de supporter ces oscillations de torsion sans qu'il soit pour ce faire nécessaire de le surdimensionner. Ceci peut être notamment nécessaire lorsque le dispositif pendulaire est intégré dans un composant en amont de toute filtration, tel que par exemple le volant primaire relié au vilebrequin. Dans une telle configuration le dispositif pendulaire voit le couple moteur sans qu'il ait été filtré au préalable.

Le corps pendulaire peut être accordé à une valeur d'ordre supérieure, notamment légèrement supérieure, à l'ordre d'excitation du moteur thermique.

Dans tout ce qui précède, l'accord du corps pendulaire à la valeur d'ordre mentionnée ci-dessus peut être obtenu en agissant sur tout ou partie des paramètres suivants :
- forme de la première piste de roulement,
- forme de la deuxième piste de roulement,
- inertie du corps pendulaire,
- distance, lorsque le dispositif est au repos, entre le centre de gravité du corps pendulaire et l'axe de rotation du support,
- distance, lorsque le dispositif est au repos, entre le centre de gravité du corps pendulaire et le point d'accrochage du corps pendulaire sur le support, et
- forme de l'organe de roulement.

Le corps pendulaire peut notamment être configuré pour être accordé à une valeur d'ordre choisie de manière à ce que le rapport entre cette valeur d'ordre et l'ordre d'excitation du moteur thermique du véhicule soit supérieur à 1,1 et inférieur à la valeur de ce rapport correspondant à la valeur d'ordre à partir de laquelle le graphe représentant, en fonction de la valeur d'ordre du corps pendulaire, le ratio entre l'amplitude des oscillations de torsion en sortie du dispositif d'amortissement et l'amplitude de ces oscillations en entrée dudit dispositif, ie la performance de filtrage de ce dispositif, atteint un plateau. Le graphe mentionné ci-dessus devient alors sensiblement horizontal au-delà de cette plage de valeurs d'ordre. Une telle plage de valeurs d'ordre permet de disposer d'un dispositif pendulaire capable d'endurer les oscillations de torsion directement issues du moteur thermique, car le corps pendulaire présente un débattement depuis sa position de repos tel que sa venue en butée contre le support ne se produise pas de façon excessive. Cette plage de valeurs d'ordre permet par ailleurs d'assurer un filtrage satisfaisant de ces oscillations de torsion. Ainsi, le fait de désaccorder le corps pendulaire de l'ordre d'excitation du moteur thermique, si cela conduit à une légère dégradation des performances de filtrage, lui permet d'être utilisé directement en aval du moteur thermique du véhicule. La plage de valeurs ci-dessus assure ainsi un meilleur compromis.

Dans tout, ce qui précède, le corps pendulaire peut également être configuré pour être accordé à une valeur d'ordre supérieure ou égale à 2, notamment supérieure ou égale à 3, étant notamment supérieure ou égale à 3,3, inférieure ou égale à 4, notamment inférieure ou égale à 3,5.

Cette valeur d'ordre implique de petit débattement, de sorte que les fenêtres associées aux organes de liaison peuvent être de dimension réduite. Le support est ainsi rigide et adapté à un positionnement sur le volant primaire ou volant primaire, notamment d'un véhicule industriel.

Dans le cas d'un moteur thermique à six cylindres, le corps pendulaire peut être configuré pour être accordé à une valeur d'ordre supérieure ou égale à 3,3, inférieure ou égale à 3,5.

Dans tout ce qui précède, la forme des pistes de roulement peut être telle que les corps pendulaires soient uniquement déplacés par rapport au support en translation autour d'un axe fictif parallèle à l'axe de rotation du support.

En variante, la forme des pistes de roulement peut être telle que les corps pendulaires soient déplacés par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Selon un aspect de l'invention, le corps pendulaire peut comprendre deux organes de liaison tels que décrits précédemment. Chaque organe de liaison peut être reçu dans une fenêtre qui lui est propre, deux fenêtres distinctes étant alors associées à un même corps pendulaire.

Le dispositif comprend par exemple plusieurs corps pendulaires, par exemple un nombre compris entre deux et huit, notamment trois ou cinq corps pendulaires. Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Des fenêtres distinctes du support peuvent alors être associées à un même corps pendulaire, chaque fenêtre recevant l'un des organes de liaison et l'organe de roulement associé.

Dans tout ce qui précède, une pièce d'interposition, encore appelée « patin », peut être prévue pour s'interposer axialement entre le support et les masses pendulaires, de manière à éviter les chocs axiaux entre ces derniers.

Selon un aspect de l'invention, le dispositif pendulaire peut être configuré de manière à ce que les corps pendulaires angulairement voisins ne viennent jamais en contact l'un avec l'autre.

La distance entre deux fenêtres adjacentes peut être choisie en fonction de la forme de ces dites fenêtres et de la forme des masses pendulaires pour que les corps pendulaires angulairement voisins ne viennent jamais en contact l'un avec l'autre.

La distance entre deux fenêtres adjacentes, chacune associée à des corps pendulaires distincts peut être comprise entre 30 et 45mm notamment égale à 36mm.

La distance entre deux fenêtres adjacentes et associées à un même corps pendulaire peut être comprise entre 25 et 40mm notamment égale à 29mm.

Le cas échéant, les faces latérales de chaque masse pendulaire peuvent présenter une forme garantissant l'existence de cette zone laissée libre. Des dégagements sont par exemple ménagés sur ces faces latérales.

L'invention a encore pour objet, selon un autre de ses aspects, un volant primaire apte à être solidarisé à un vilebrequin de moteur thermique, le volant intégrant un dispositif pendulaire tel que décrit ci-dessus.

Selon cet aspect de l'invention, le dispositif d'amortissement d'oscillations de torsion est apte à être fixé sur le primaire du système de transmission, « primaire » signifiant « solidaire du vilebrequin du moteur thermique ».

Le volant peut être rigide, c'est-à-dire dépourvu d'organe d'accumulation d'énergie tel que des ressorts.

Selon un aspect de l'invention, le volant peut définir une cavité dans laquelle est reçu le dispositif pendulaire. Le dispositif pendulaire peut notamment s'étendre en totalité dans cette cavité, radialement et/ou axialement. L'ajout d'un tel dispositif pendulaire et la forme de la cavité permettent de garder sensiblement inchangées l'inertie et la masse d'un volant primaire dépourvu de dispositif pendulaire de sorte que la résistance aux contraintes est sensiblement identique. Les variations de la masse et l'inertie du volant resteront notamment inférieure à 5%, notamment inférieure à 2%, de préférence inférieure à 1%.

Le dispositif peut s'étendre sur une portion localisé et réduite du volant primaire. Le rapport entre la dimension radiale du dispositif pendulaire et la dimension radiale D2 du volant primaire 1 peut être est compris entre 0,25 et 0.4, notamment autour de 0.33.

Le support et le volant peuvent être montés sans mouvement relatif possible entre eux. Cela permet d'optimiser, notamment de minimiser la forme de la cavité, en particulier sa dimension radiale. L'espace radial entre le dispositif pendulaire et le volant permet uniquement d'éviter les problèmes d'assemblage.

La cavité peut être ouverte axialement en direction du vilebrequin et du moteur thermique de sorte que le dispositif pendulaire soit facilement accessible, notamment en cas de maintenance.

Le support peut être solidarisé radialement intérieurement par rapport aux masses pendulaires sur un rebord du volant primaire. Le bord radialement intérieur de support peut comprendre des languettes d'extension radiale pour le passage, par exemple de vis ou de rivets pour la solidarisation du support. Ces languettes peuvent être de forme arrondie et répartie circonférentiellement autour de l'axe de rotation. Des logements axiaux peuvent être prévus dans le volant pour recevoir les languettes permettant de les maintenir circonférentiellement. Ces logements facilitent également le guidage du dispositif pendulaire lors de sa mise en place.

La cavité peut comprendre :
- une première zone délimitée par le rebord sur lequel est fixé le support, et
- une deuxième zone radialement extérieure par rapport à la première zone dans laquelle sont reçus le ou les corps pendulaires,
la deuxième zone étant axialement plus profonde que la première zone de sorte que les corps pendulaires peuvent être entièrement logés dans la cavité.

L'invention pourra être mieux comprise à la lecture de la description qui va suivre d'un exemple non limitatif de mise en œuvre de celle-ci et à l'examen du dessin annexé sur lequel :
- la figure 1 est une vue en coupe d'un volant primaire selon l'invention dans un plan comprenant l'axe de rotation,
- la figure 2 est une vue de face du volant primaire de la figure 1,
- la figure 3 représente schématiquement un organe de liaison d'un dispositif pendulaire selon l'invention,
- la figure 4 représente un dispositif d'amortissement de butée d'un dispositif pendulaire selon l'invention, et
- la figure 5 est un détail de la figure 2.

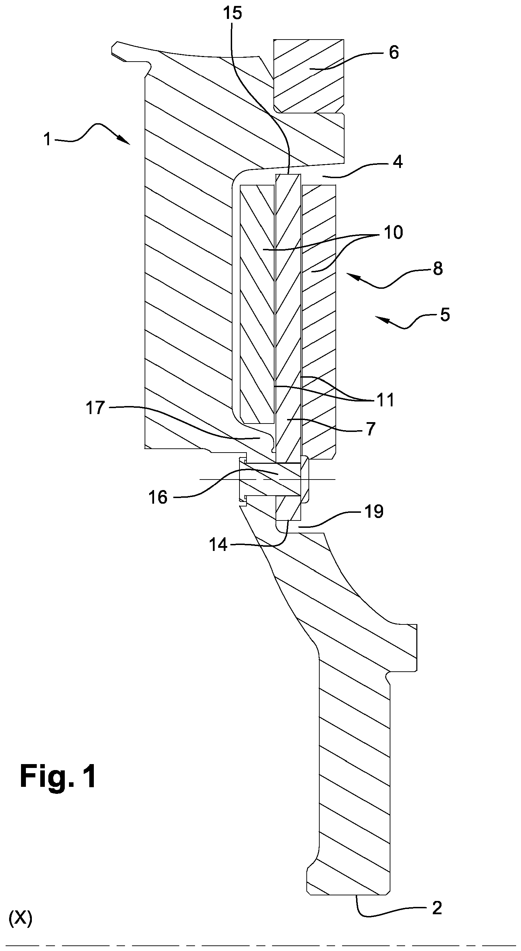

On a représenté sur la figure 1, un volant primaire 1 pour véhicule industriel, tel qu'un poids lourd, mobile en rotation autour d'un axe de rotation X et apte à être solidarisé à un vilebrequin de moteur thermique, non représenté ici. Seuls des trous 2 pour le passage de vis servant à solidariser les deux pièces sont visibles sur la figure 1. Ces trous 2 sont répartis circonférentiellement autour de l'axe X.

Dans l'exemple considéré, le volant 1 est rigide et il définit une cavité 4 dans laquelle est reçu un dispositif pendulaire 5. Cette cavité 4 est ouverte axialement en direction du vilebrequin.

Dans l'exemple considéré à la figure 1, le dispositif pendulaire 5 s'étend axialement et radialement en totalité dans cette cavité 4.

Dans l'exemple considéré, le volant 1 comporte une couronne de démarrage 6 s'étendant sur une même hauteur axiale que la cavité 4.

Dans l'exemple considéré, le dispositif pendulaire comprend un support 7, mobile en rotation autour de l'axe X, et une pluralité de corps pendulaire 8 mobiles par rapport au support. Le nombre de corps pendulaires peut être ici compris entre deux et huit, notamment cinq corps pendulaires 8, tous ces corps pendulaires 8 se succédant circonférentiellement.

Chaque corps pendulaire 8 comprend une première et une deuxième masse pendulaire 10 espacées axialement l'une par rapport à l'autre et mobiles par rapport au support 7, la première masse pendulaire étant disposée d'un premier côté 11 du support et la deuxième masse pendulaire étant disposée d'un deuxième côté 11 du support.

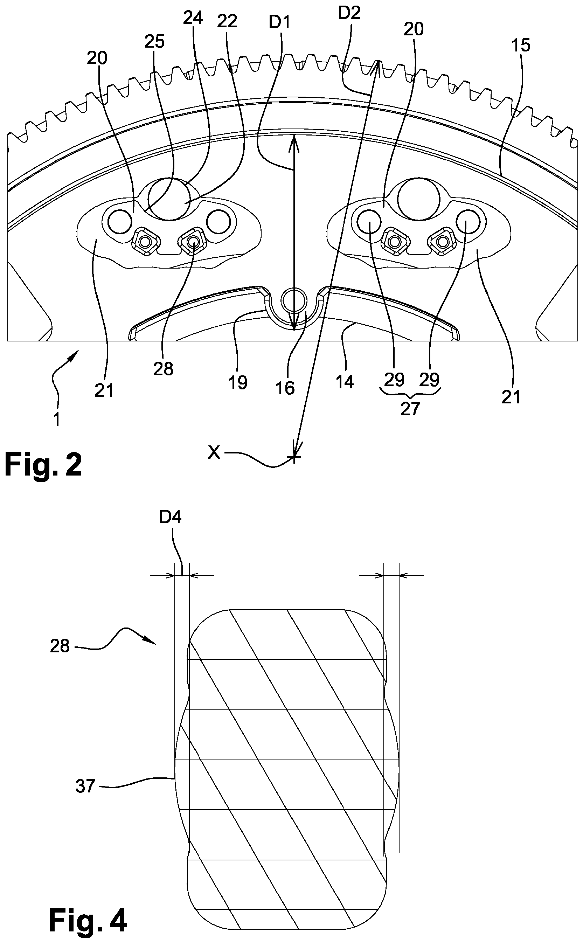

Dans l'exemple considéré, le support 7 est unique et réalisé d'une seule pièce, par exemple une tôle creuse. Le support 7 s'étend exclusivement entre un bord radialement intérieur 14 sensiblement circulaire et un bord radialement extérieur 15 sensiblement circulaire. Dans l'exemple considéré, le bord radialement intérieur 14 comprend des languettes 16 d'extension radiale pour le passage par exemple de vis ou de rivets pour la solidarisation du support 7 radialement intérieurement par rapport aux masses pendulaires 10 sur un rebord 17 du volant primaire. Ces languettes 16, visibles à la figure 2, peuvent être de forme arrondie et répartie circonférentiellement autour de l'axe X. Des logements 19 axiaux sont prévus dans le volant 1 pour recevoir ces languettes 16.

Dans l'exemple considéré, la cavité comprend ainsi :
- une première zone délimitée par le rebord 17 sur lequel est fixé le support 7, et
- une deuxième zone radialement extérieure par rapport à la première zone dans laquelle sont reçus les corps pendulaires 8,
la deuxième zone étant axialement plus profonde que la première zone de sorte que les corps pendulaires 8 sont entièrement logés dans la cavité 4.

La figure 2, qui est une vue de face du volant de la figure 1, permet de détailler le dispositif pendulaire 5.

Dans l'exemple considéré, Le rapport entre la dimension radiale D1 du dispositif pendulaire, plus précisément entre la dimension radiale du support 7 (les corps pendulaires ne dépassant pas radialement du support), et la dimension radiale D2 du volant primaire 1 est compris entre 0,25 et 0.4.

Dans l'exemple considéré, chaque corps pendulaire 8 comprend deux organes de liaison 20 chacun appariant les première et deuxième masses pendulaires 10 dont l'une est représentée en transparence sur la figure 2. Chaque organe de liaison 20 est reçu dans une fenêtre 21 qui lui est propre, deux fenêtres 21 distinctes étant alors associées à un même corps pendulaire 8. Chaque fenêtre 21 peut être un évidement à contour fermé et continu ménagé dans le support 7 et chaque fenêtre 21 définit un espace vide à l'intérieur du support.

Dans l'exemple considéré, le dispositif pendulaire peut être configuré de manière à ce que les corps pendulaires 8 angulairement voisins ne viennent jamais en contact l'un avec l'autre. La distance entre deux fenêtres 21 adjacentes peut être choisie en fonction de la forme de ces dites fenêtres 21 et de la forme des masses pendulaires 10 pour que les corps pendulaires 8 angulairement voisins ne viennent jamais en contact l'un avec l'autre.

Par exemple, la distance entre deux fenêtres 21 adjacentes, chacune associée à des corps pendulaires 8 distincts peut être comprise entre 30 et 45mm, notamment égale à 36mm.

Par exemple, la distance entre deux fenêtres 21 adjacentes et associées à un même corps pendulaire 8 peut être comprise entre 25 et 40mm, notamment égale à 29mm.

Bien que cela ne soit pas représenté, les faces latérales de chaque masse pendulaire peuvent présenter une forme garantissant l'existence de cette zone laissée libre. Des dégagements sont par exemple ménagés sur ces faces latérales.

Dans l'exemple considéré, le déplacement de chaque corps pendulaire 8 par rapport au support 7 est guidé par deux organes de roulement 22, chacun associé à un organe de liaison 20, coopérant uniquement avec une première piste de roulement 24 solidaire du support 7 et uniquement avec une deuxième piste de roulement solidaire 25 du corps pendulaire 8.

Chaque organe de roulement 22 est ici un rouleau de section circulaire dans le plan de la figure. En particulier, les extrémités axiales des organes de roulement sont dépourvues de rebord annulaire fin. Les organes de roulement 22 sont par exemple réalisés en acier et ils peuvent être creux ou plein. La section circulaire des organes de roulement peut être comprise 15 et 25mm, notamment égale à 19mm.

Dans l'exemple considéré, chaque première piste de roulement 24 est définie par une partie du contour de la fenêtre 21 orientée radialement vers l'intérieur et chaque deuxième piste de roulement 25 est définie par une partie de contour de l'organe de liaison 20 orientée radialement vers l'extérieur.

Ces première et deuxième pistes de roulement 24, 25 sont radialement en regard et chaque organe de roulement 22 coopère avec ces pistes de roulement 24, 25 uniquement via sa surface extérieure de sorte que chaque organe de roulement 22 est uniquement sollicité en compression entre les pistes de roulement mentionnées ci-dessus lorsque le volant primaire 1 tourne autour de l'axe X.

Dans l'exemple considéré, chaque organe de liaison comporte également un système de liaison 27 des masses pendulaires. Le dispositif pendulaire comporte également des organes d'amortissement de butée 28, deux organes d'amortissement 28 étant solidaires de chaque organe de liaison 20. Dans chaque fenêtre 21 sont disposés uniquement un organe de liaison 20, un organe de roulement 22 et deux organes d'amortissement de butée 28. Ces éléments seront détaillés en référence aux figures suivantes.

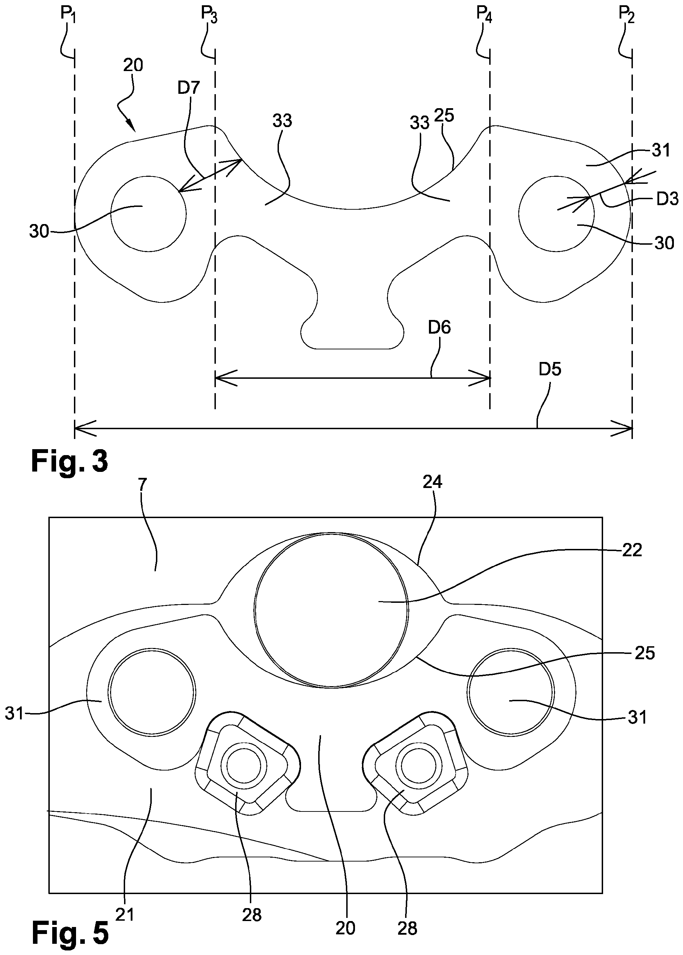

La figure 3 représente schématiquement un organe de liaison d'un dispositif pendulaire selon l'invention. Dans l'exemple considéré, la deuxième piste de roulement 25 est localisée sur la partie du contour de l'organe de liaison orientée radialement vers l'extérieur. L'organe de liaison s'étend entre un premier plan P1 et un deuxième plan P2 qui sont tangents à l'organe de liaison. La deuxième piste de roulement 25 est définie par le contour de l'organe de liaison 20 et s'étend depuis un troisième plan P3 vers un quatrième plan P4 qui sont sécants à l'organe de liaison. Une première distance D5 mesurée entre le premier plan et le deuxième plan est 1,5 à 3,5 fois supérieure à une deuxième distance D6 mesurée entre le troisième plan et le quatrième plan, le premier plan, le deuxième plan, le troisième plan et le quatrième plan étant parallèles entre eux.

Dans un exemple, la distance entre le premier plan P1 et le deuxième plan P2 est égale à 60 mm et la distance entre le troisième plan P3 et le quatrième plan P4 est égale à 27,4 mm.

L'organe de liaison est symétrique selon un plan perpendiculaire au plan de la figure, la dimension angulaire est mesurée depuis un axe X', parallèle à l'axe X, appartenant à ce plan de symétrie.

Dans l'exemple considéré, le système de liaison 27 des masses pendulaires comprend deux éléments d'assemblage 29, notamment des rivets, visibles aux figures 2 et 4, chacun reçu dans une ouverture 30 ménagée dans une des deux extrémités circonférentielles 31 de l'organe de liaison, ces extrémités étant dépourvues de la deuxième piste de roulement 25 localisée circonférentiellement au centre de l'organe de liaison 22.

Les deux ouvertures 30 encadrent circonférentiellement la deuxième piste de roulement 25 et sont en partie radialement au niveau de la deuxième piste de roulement si bien le système de liaison 27 s'étend au moins radialement au niveau de la deuxième piste de roulement.

Dans l'exemple considéré, les ouvertures 31 sont circulaires et leur diamètre peut être compris entre 6 et 10mm.

Dans l'exemple considéré, chaque extrémité circonférentielle 31 prend la forme d'un lobe sensiblement arrondie. Chaque extrémité circonférentielle 31 s'étend circonférentiellement depuis la deuxième piste de roulement 25. La rencontre de chaque extrémité circonférentielle 31 et de la deuxième piste de roulement 25 définit une rupture de la trajectoire du contour de l'organe de liaison 20 formant ainsi une extrémité circonférentielle de la deuxième piste de roulement 25. Chaque extrémité circonférentielle 31 s'étend radialement extérieurement par rapport à la deuxième piste de roulement 25. Chaque extrémité circonférentielle 31 est reliée au reste de l'organe de liaison via un amincissement 33 dudit organe.

Dans l'exemple considéré, l'ouverture peut être réalisée par découpage, notamment par découpage presse. Chaque extrémité circonférentielle 31 est configurée de sorte que l'ouverture 30 puisse être réalisée par découpage, notamment par découpage presse. Chaque ouverture 30 est à une distance minimale D3 supérieure à la moitié de la dimension axiale de l'organe de liaison 20, dimension qui peut être comprise entre 6.5 et 7.5mm, notamment égale à 6.8mm.

Chacune des masses pendulaires 10 peut également être configurée pour que l'ouverture recevant l'organe d'assemblage puisse être réalisée par découpage, notamment par découpage presse. Ainsi des ouvertures recevant les rivets ménagées dans les masses pendulaires peuvent être à une distance minimale du contour des masses pendulaires supérieure à la moitié de la dimension axiale des masses pendulaires 10. Cette dimension peut être comprise entre 6 et 10 mm, notamment égale à 8mm.

Dans l'exemple considéré, les deux organes d'amortissements de butée 28, non représentés à la figure 3, sont interposés radialement entre le support 7 et l'organe de liaison 20. Chaque organe d'amortissement 28 est reçu dans un renfoncement 35 ménagé dans l'organe de liaison 22. L'organe d'amortissement 28 est maintenu radialement par complémentarité de forme dans le renfoncement 35. Le renfoncement 35 définit l'amincissement 33 de l'organe de liaison par lequel l'extrémité circonférentielle 31 est reliée au reste dudit organe 20.

Entre les deux renfoncements 35 associés à chacun des deux organes d'amortissement 28, l'organe de liaison présente une forme d'ancre permettant la retenue radiale desdits organes d'amortissement. Les deux renfoncements 35 sont disposés circonférentiellement entre les ouvertures des organes d'assemblage 31 et radialement intérieurement par rapport à la deuxième piste de roulement 25.

Un exemple d'organe d'amortissement 28 est présenté à la figure 4. Dans l'exemple considéré, l'organe d'amortissement 28 peut présenter des propriétés élastiques permettant l'amortissement des chocs liés à la venue en contact du corps pendulaire 8 et du support 7. L'organe d'amortissement 28 est par exemple réalisé en élastomère ou en caoutchouc.

Dans l'exemple considéré, l'organe d'amortissement 28 prend une forme sensiblement cubique et deux faces latérales en regard des masses pendulaires. Ces faces latérales comportent chacune un plot 37 en saillie axial et ces plots 37 sont en regard axial l'un de l'autre. La dimension axiale de l'organe au niveau des plots est plus grande que l'écart axial entre les masses pendulaires de sorte que les plots sont en permanence en contact de ces dites masses. Chaque plot 37 est de forme sensiblement arrondie. La dimension axiale D4 de chaque plot est comprise entre 0.2 et 0.6mm, notamment égale à 0.4mm.

Pour filtrer les oscillations de torsions, chaque corps pendulaires 8 se déplace par rapport au support 7 en étant guidé par les organes de roulement coopérant avec les pistes de roulement. Dans le cas où le volant primaire est solidarisé au vilebrequin d'un moteur thermique à six cylindres, les corps pendulaires peuvent être configurés pour être accordé à une valeur d'ordre supérieure ou égale à 3,3, inférieure ou égale à 3,5.

L'accord des corps pendulaires à la valeur d'ordre mentionnée ci-dessus peut être obtenu en agissant sur tout ou partie des paramètres suivants :
- forme de la première piste de roulement 24,
- forme de la deuxième piste de roulement 25,
- inertie des corps pendulaire 8,
- distance, lorsque le dispositif 5 est au repos, entre le centre de gravité des corps pendulaires 8 et l'axe de rotation X,
- distance, lorsque le dispositif est au repos, entre le centre de gravité des corps pendulaires 8 et les point d'accrochage des corps pendulaires 8 sur le support 7, et
- forme de l'organe de roulement 22.

Dans l'exemple configuré, par exemple en cas d'oscillations de vibrations trop importantes et a l'issu d'un déplacement intermédiaire du corps pendulaire 8 dans la direction circonférentielle, par exemple dans le sens horaire, par exemple dans le sens antihoraire, depuis sa position de repos, position représenté à la figure 5, un des deux organes d'amortissement 28 vient en contact du support 7 pour amortir les chocs. A partir de ce déplacement intermédiaire et jusqu'à un déplacement maximal du corps pendulaire 8, cet organe d'amortissement 28 est progressivement comprimé. A l'issu du déplacement maximal, l'organe de liaison, par l'une de ses extrémités circonférentielle 31, vient directement en contact du support pour stopper le déplacement du corps pendulaire 8 et la compression de l'organe de butée 28. L'extrémité circonférentielle 31 et le contour de la fenêtre 22 peuvent être conformés de sorte que le contact se fasse selon une surface à l'issu du déplacement maximal.

Dans l'exemple considéré, chaque organe d'amortissement est associé uniquement à sens du déplacement circonférentielle du corps pendulaire 8, horaire ou antihoraire.

L'invention n'est pas limitée aux exemples qui viennent d'être décrits.

## Revendications

1. Dispositif pendulaire (5) apte à être intégré dans un composant pour système de transmission de véhicule, notamment de véhicule industriel, comprenant :
- un support (7), mobile en rotation et apte à être solidarisé au composant, et
- au moins un corps pendulaire (8) mobile par rapport au support (7), le déplacement du corps pendulaire par rapport au support étant guidé par au moins un organe de roulement (22) coopérant avec au moins une première piste de roulement (24) solidaire du support et au moins une deuxième piste de roulement solidaire (25) du corps pendulaire, le corps pendulaire comprenant :
- une première et une deuxième masse pendulaire (10) espacées axialement l'une par rapport à l'autre et mobiles par rapport au support (7), la première masse pendulaire (10) étant disposée d'un premier côté (11) du support et la deuxième masse pendulaire (10) étant disposée d'un deuxième côté (11) du support, et
- au moins un organe de liaison (20) de la première et de la deuxième masse (10) appariant lesdites masses, l'organe de liaison étant disposé dans une fenêtre (21) du support dont une partie du contour définit la première piste de roulement (24), **caractérisé en ce que**
- l'organe de liaison s'étend entre un premier plan (P1) et un deuxième plan (P2) qui sont tangents à l'organe de liaison,
- la deuxième piste de roulement (25) est définie par le contour de l'organe de liaison (20) et s'étend depuis un troisième plan (P3) vers un quatrième plan (P4) qui sont sécants à l'organe de liaison,
- une première distance D5 mesurée entre le premier plan et le deuxième plan est 1,5 à 3,5 fois supérieure à une deuxième distance D6 mesurée entre le troisième plan et le quatrième plan, le premier plan, le deuxième plan, le troisième plan et le quatrième plan étant parallèles entre eux.

2. Dispositif pendulaire (5) selon la revendication précédente, l'organe de liaison (20) comportant au moins un système de liaison (27) des masses pendulaires s'étendant au moins en partie radialement au niveau de la deuxième piste de roulement (25).

3. Dispositif pendulaire (5) selon la revendication précédente, le système de liaison (20) comprenant un élément d'assemblage (29) reçu dans une ouverture (30) ménagée dans une extrémité circonférentielle (31) de l'organe de liaison.

4. Dispositif pendulaire (5) selon la revendication précédente, l'ouverture (30) étant réalisée par découpage, notamment par découpage presse.

5. Dispositif pendulaire (5) selon l'une quelconque des revendications précédentes, comprenant au moins un organe d'amortissement de butée (28) interposé radialement entre le support et l'organe de liaison.

6. Dispositif pendulaire (5) selon la revendication précédente, l'organe d'amortissement (28) prenant une forme sensiblement cubique, l'organe d'amortissement (28) étant reçu dans un renfoncement (35) ménagé dans l'organe de liaison (20).

7. Dispositif pendulaire (5) selon l'une quelconque des revendications 2 à 6, l'organe de liaison (20) comportant deux ouvertures (30) pour recevoir des organes d'assemblage encadrant circonférentiellement la deuxième piste de roulement (25).

8. Dispositif pendulaire (5) selon l'une quelconque des revendications précédentes, le corps pendulaire (8) étant configuré pour être accordé à une valeur d'ordre supérieure ou égale à 2, notamment supérieure à 3, étant notamment supérieure à 3,3, et inférieure ou égale à 4, étant notamment inférieure à 3,5.

9. Dispositif pendulaire (5) selon l'une quelconque des revendications précédentes, comprenant plusieurs corps pendulaires (8), par exemple un nombre compris entre deux et huit, tous ces corps pendulaires (8) se succédant circonférentiellement, chaque corps pendulaire comprenant deux organes de liaison (20), chaque organe de liaison étant reçu dans une fenêtre (21) qui lui est propre.

10. Dispositif pendulaire (5) selon la revendication précédente, la distance entre deux fenêtres (21) adjacentes étant choisie en fonction de la forme de ces dites fenêtres (21) et de la forme des masses pendulaires (10) pour que les corps pendulaires (8) angulairement voisins ne viennent jamais en contact l'un avec l'autre.

11. Volant primaire (1) apte à être solidarisé à un vilebrequin de moteur thermique d'un véhicule, notamment d'un véhicule industriel, le volant intégrant un dispositif pendulaire (5) selon l'une quelconque des revendications précédentes.

## Patentansprüche

1. Pendelvorrichtung (5), die dazu geeignet ist, in eine Komponente für ein Getriebesystem eines Fahrzeugs, insbesondere eines Industriefahrzeugs, integriert zu werden, umfassend:
- einen Träger (7), der drehbar und dazu geeignet ist, fest mit der Komponente verbunden zu werden, und
- mindestens einen Pendelkörper (8), der in Bezug auf den Träger (7) beweglich ist, wobei die Bewegung des Pendelkörpers in Bezug auf den Träger durch mindestens ein Rollorgan (22) geführt wird, das mit mindestens einer fest mit dem Träger verbundenen ersten Rollbahn (24) und mindestens einer fest mit dem Pendelkörper verbundenen zweiten Rollbahn (25) zusammenwirkt, wobei der Pendelkörper Folgendes umfasst:
- eine erste und eine zweite Pendelmasse (10), die axial voneinander beabstandet und in Bezug auf den Träger (7) beweglich sind, wobei die erste Pendelmasse (10) auf einer ersten Seite (11) des Trägers angeordnet ist und die zweite Pendelmasse (10) auf einer zweiten Seite (11) des Trägers angeordnet ist, und
- mindestens ein Organ (20) zur Verbindung der ersten und der zweiten Masse (10), das die Massen paarweise verbindet, wobei das Verbindungsorgan in einem Fenster (21) des Trägers angeordnet ist, von dem ein Teil der Kontur die erste Rollbahn (24) definiert, **dadurch gekennzeichnet, dass**
- sich das Verbindungsorgan zwischen einer ersten Ebene (P1) und einer zweiten Ebene (P2) erstreckt, die tangential zum Verbindungsorgan verlaufen,
- die zweite Rollbahn (25) durch die Kontur des Verbindungsorgans (20) definiert ist und sich von einer dritten Ebene (P3) zu einer vierten Ebene (P4) erstreckt, die das Verbindungsorgan schneiden,
- ein erster Abstand D5, der zwischen der ersten Ebene und der zweiten Ebene gemessen wird, 1,5- bis 3,5-mal größer als ein zweiter Abstand D6 ist, der zwischen der dritten Ebene und der vierten Ebene gemessen wird, wobei die erste Ebene, die zweite Ebene, die dritte Ebene und die vierte Ebene parallel zueinander sind.

2. Pendelvorrichtung (5) nach dem vorangehenden Anspruch, wobei das Verbindungsorgan (20) mindestens ein System (27) zur Verbindung der Pendelmassen umfasst, das sich zumindest teilweise radial im Bereich der zweiten Rollbahn (25) erstreckt.

3. Pendelvorrichtung (5) nach dem vorangehenden Anspruch, wobei das Verbindungssystem (20) ein Montageelement (29) umfasst, das in einer Öffnung (30) aufgenommen ist, die in einem Umfangsende (31) des Verbindungsorgans ausgebildet ist.

4. Pendelvorrichtung (5) nach dem vorangehenden Anspruch, wobei die Öffnung (30) durch Stanzen, insbesondere durch Stanzpressen ausgeführt ist.

5. Pendelvorrichtung (5) nach einem der vorangehenden Ansprüche, umfassend zumindest ein Anschlagdämpfungsorgan (28), das radial zwischen dem Träger und dem Verbindungsorgan angeordnet ist.

6. Pendelvorrichtung (5) nach dem vorangehenden Anspruch, wobei das Dämpfungsorgan (28) eine im Wesentlichen kubische Form annimmt, wobei das Dämpfungsorgan (28) in einer Vertiefung (35) aufgenommen ist, die im Verbindungsorgan (20) ausgebildet ist.

7. Pendelvorrichtung (5) nach einem der Ansprüche 2 bis 6, wobei das Verbindungsorgan (20) zwei Öffnungen (30) zur Aufnahme der Montageorgane aufweist, die die zweite Rollbahn (25) in Umfangsrichtung einrahmen.

8. Pendelvorrichtung (5) nach einem der vorangehenden Ansprüche, wobei der Pendelkörper (8) so konfiguriert ist, dass er mit einem Sollwert von größer als oder gleich 2, insbesondere größer als 3, ganz insbesondere größer als 3,3, und kleiner als oder gleich 4, insbesondere kleiner als 3,5, abgestimmt ist.

9. Pendelvorrichtung (5) nach einem der vorangehenden Ansprüche, umfassend mehrere Pendelkörper (8), beispielsweise eine Anzahl zwischen zwei und acht, wobei alle diese Pendelkörper (8) in Umfangsrichtung aufeinanderfolgen, wobei jeder Pendelkörper zwei Verbindungsorgane (20) umfasst, wobei jedes Verbindungsorgan in einem eigenen Fenster (21) aufgenommen ist.

10. Pendelvorrichtung (5) nach dem vorangehenden Anspruch, wobei der Abstand zwischen zwei benachbarten Fenstern (21) in Abhängigkeit von der Form dieser Fenster (21) und von der Form der Pendelmassen (10) so gewählt ist, dass die winkelmäßig benachbarten Pendelkörper (8) niemals miteinander in Kontakt kommen.

11. Primäres Schwungrad (1), das dazu geeignet ist, mit einer Kurbelwelle eines Verbrennungsmotors eines Fahrzeugs, insbesondere eines Industriefahrzeugs, verbunden zu werden, wobei das Schwungrad eine Pendelvorrichtung (5) nach einem der vorangehenden Ansprüche integriert.

## Claims

1. A pendulum-type device (5) capable of being integrated into a vehicle transmission system component, especially for an industrial vehicle, comprising:
- a support (7), that is mobile in rotation and is capable of being made integral with the component, and
- at least one pendulum-type member (8) that is mobile relative to the support (7), wherein the displacement of the pendulum-type member relative to the support is guided by at least one rolling means (22) cooperating with at least one first rolling track (24) integral with the support and with at least one second rolling track (25) integral with the pendulum-type member, wherein the pendulum-type member comprises:
- a first and a second pendulum-type mass (10) spaced axially relative to one another and mobile relative to the support (7), wherein the first pendulum-type mass (10) is disposed on a first side (11) of the support and the second pendulum-type mass (10) is disposed on a second side (11) of the support, and
- at least one means (20) for connecting the first and the second mass (10) and pairing the said masses, wherein the connecting means is disposed in a window (21) of the support, one part of the contour of which defines the first rolling track (24), **characterized in that**
- the connecting means extends between a first plane (P1) and a second plane (P2), which are tangents to the connecting means,
- the second rolling track (25) is defined by the contour of the connecting means (20) and extends from a third plane (P3) toward a fourth plane (P4), which are secants to the connecting means,
- a first distance D5 measured between the first plane and the second plane is 1.5 to 3.5 times greater than a second distance D6 measured between the third plane and the fourth plane, wherein the first plane, the second plane, the third plane and the fourth plane are parallel to one another.

2. A pendulum-type device (5) according to the preceding claim, wherein the connecting means (20) is provided with at least one connecting system (27) of the pendulum-type masses that extends radially at least in part in the region of the second rolling track (25).

3. A pendulum-type device (5) according to the preceding claim, wherein the connecting system (20) comprises an assembly element (29) received in an opening (30) made in one circumferential end (31) of the connecting means.

4. A pendulum-type device (5) according to the preceding claim, wherein the opening (30) is made by cutting, especially by stamping.

5. A pendulum-type device (5) according to any one of the preceding claims, comprising at least one abutting damping means (28) interposed radially between the support and the connecting means.

6. A pendulum-type device (5) according to the preceding claim, wherein the damping means (28) has a substantially cubic shape, wherein the damping means (28) is received in a recess (35) made in the connecting means (20).

7. A pendulum-type device (5) according to any one of claims 2 to 6, wherein the connecting means (20) is provided with two openings (30) for receiving the assembly means circumferentially framing the second rolling track (25).

8. A pendulum-type device (5) according to any one of the preceding claims, wherein the pendulum-type member (8) is configured to be tuned to an order value greater than or equal to 2, in particular greater than 3, wherein it is in particular greater than or equal to 3.3, and less than or equal to 4, and in particular is less than 3.5.

9. A pendulum-type device (5) according to any one of the preceding claims, wherein it comprises several pendulum-type members (8), for example a number ranging between two and eight, wherein all of these pendulum-type members (8) follow one another circumferentially, wherein each pendulum type member comprises two connecting means (20), wherein each connecting means is received in a window (21) specific to it.

10. A pendulum-type device (5) according to the preceding claim, wherein the distance between two adjacent windows (21) may be chosen as a function of the shape of these said windows (21) and of the shape of the pendulum-type masses (10), so that the angularly neighboring pendulum-type members (8) never come into contact with one another.

11. A primary flywheel (1) capable of being made integral with a crankshaft of a combustion engine of a vehicle, especially of an industrial vehicle, wherein the flywheel integrates a pendulum-type device (5) according to any one of the preceding claims.
